# EUROPEAN PATENT SPECIFICATION

(11) **EP 3 754 208 B1**
(45) Date of publication and mention of the grant of the patent: **02.08.2023**
(21) Application number: 19181225.4
(22) Date of filing: 19.06.2019
(51) Int. Cl.: F16B 5/06, F16B 19/10, F16B 21/07, F16B 19/00

(54) **RETAINING DEVICE AND SYSTEM FOR VHICLE COMPONENTS, IN PARTICULAR DOOR PANELS**
HALTEVORRICHTUNG UND SYSTEM FÜR FAHRZEUGKOMPONENTEN, INSBESONDERE TÜRPANEELE
DISPOSITIF DE RETENUE ET SYSTÈME POUR COMPOSANTS DE VÉHICULE, EN PARTICULIER DES PANNEAUX DE PORTE

(43) Date of publication of application: 23.12.2020
(73) Proprietor: Illinois Tool Works Inc., Glenview, IL 60025 (US)
(72) Inventor: BUILLAS, Lara, 11020 HONE (AO) (IT)
(74) Representative: HGF

(56) References cited:
- WO-A1-2013/114303
- FR-A1- 2 671 587
- US-A- 5 641 255
- US-A1- 2014 050 548
- US-A1- 2017 002 853

## Description

### Technical field of the invention

The present invention relates to a retaining device and to an associated retaining system suitable for fixing functional components of a vehicle to the bodywork of vehicles. In particular, the invention relates to a retaining device and system for fixing lining panels to the inside (or outside) of a vehicle passenger compartment and more particularly for fixing door panels to the sheet metal forming the frame of vehicle doors.

### Prior art

It is known that in the motor vehicle sector it is required to fasten numerous functional elements to the vehicle bodies. In particular, it is required to fasten to the sheet-metal frames of vehicle doors the lining panels which cover and close the internal volume of the doors where various components such as door-locking devices, window opening mechanisms, etc., are housed. These lining panels must therefore be able to be easily removed and fitted again to allow maintenance operations to be carried out.

For this purpose, retaining devices are used, these including a pin consisting of a head and a shank projecting axially from the head, and a bush which is coupled with a snap-fit (or a bayonet)coupling together with suitable seats or through-holes formed in the sheet-metal body or support frame of the vehicle doors, by means of at least one pair of opposite teeth which project radially from a side wall of the bush, on the outside thereof.

The head of the pin is inserted inside suitable seats in the lining panels and then the shank of the pin is snap-engaged inside the bush which is provided at its end directed towards the head of the pin with a flange and shoulder elements which project radially on the outside from the side wall of the bush and which are configured to cooperate during use with the body or support frame of the vehicle, along an edge of the seats or through-holes in the body or door frame, so as to keep the bush in position during insertion and locking of the pin in position.

The shoulder elements are arranged at a predefined distance from a stop end of the teeth, said stop end being directed towards the flange so as to form with the shoulder elements respective radial recesses having a height such to be able to accommodate inside the recess, between each shoulder element and a corresponding tooth facing it, different-thickness metal sheets of the body or door frame. In fact, the seats or through-holes inside which the said retaining devices are inserted may have different depths since in certain points the sheet metal which forms the body or door frame must be reinforced, for example by superimposing two or more metal sheets with the same or a different thickness.

Therefore the height of the recesses, i.e. the predefined distance between the stop end of the teeth and the shoulder elements arranged in a corresponding angular position facing them, must be chosen so as to be able to accommodate metal sheets with the maximum permissible thickness.

Consequently, when identical retaining devices (for obvious reasons of standardization) are used on thinner metal sheets, an axial play is formed between the stop end of the teeth and the metal sheet, which play may allow small relative movements of the retaining devices and the body which are the cause of undesirable noise, if not even possible fatigue damage of the said retaining devices and/or functional elements which are to be fixed.

This drawback is neither partially nor fully resolved by the presence on the bush flange of a sucker-like gasket made of a material softer than that of the bush (generally made, like the pin, by means of injection-moulding of a synthetic plastic material), said gasket being co-moulded onto the flange with the main aim of elastically cooperating with the body or door frame so as to ensure a liquid-tight closure of the through-seat or hole formed therein in order to receive the bush and pin.

US 2014/050548 discusses a fastening clip for fastening a component to a carrier having an anchoring member which can be inserted into an opening of the carrier and has latching tabs which, in a latching position, can rest against an edge of the opening and/or can latch thereon, and having a locking member which can cooperate with the component, extends through the anchoring member and is displaceable relative to these between a mounting position and a locking position in which the locking member fixes the latching tabs in place in the latching position, holding members are provided on the anchoring member, with the locking member, upon a movement of the locking member from the locking position to the mounting position, urging the holding members radially outwards to a holding position, in which they engage the edge of the opening.

US 5641255 discusses a clip which is comprised of a male member and a female member. The male member is inserted into the female member, and an inserting portion of a leg of the male member passes through split pieces of the female member. The clip in which the male member and the female member are assembled is inserted into through holes in panels to be fastened. When the male member is slightly pulled back, tip ends of the split pieces are engaged in engaging holes in the inserting portion, allowing the clip to be pressed in with the split pieces set in a state of reduced diameter.

### Summary of the invention

An object of the present invention is therefore that of overcoming the drawbacks of the state of the art by providing a retaining device and system which have a simple design, are reliable, small in size and relatively inexpensive and which allow functional components such as door panels to be fixed to the body or door frame of a vehicle provided for this purpose, in a rapid manner, by means of a relatively small engaging force, and which are also substantially free from noise during use even when the said retaining devices are used on bodies or door frames with different thicknesses.

The present invention therefore relates to a retaining device and to an associated retaining system as defined in the accompanying claims.

### Brief description of the drawings

Further characteristic features and advantages of the present invention will become clear from the following description of a possible embodiment thereof, provided purely by way of a non-limiting example, with reference to the accompanying drawings in which:
- Figure 1 shows in schematic way a perspective three-quarters front view of a retaining device designed according to the invention, in a partially assembled configuration;
- Figure 2 shows in schematic way an elevation view cross-sectioned along a plane II-II of the retaining device according to Figure 1;
- Figure 3 shows in schematic way and on a larger scale an elevation view cross-sectioned along a plane III-III of the retaining device according to Figure 2, in a completely assembled configuration and mounted on a vehicle body element so as to form the retaining system according to the invention;
- Figures 4 and 5 show in schematic way the same view as that of Figure 3 with the retaining device and system mounted on body elements of varying thickness; and
- Figure 6 shows in schematic way and on a larger scale a perspective three-quarters side view of a component of the retaining device according to the invention.

### Detailed description

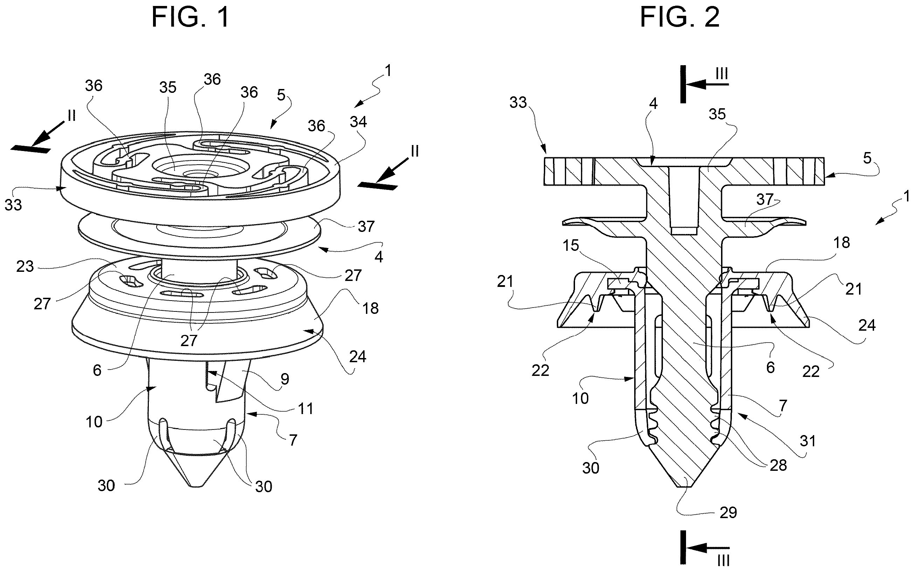

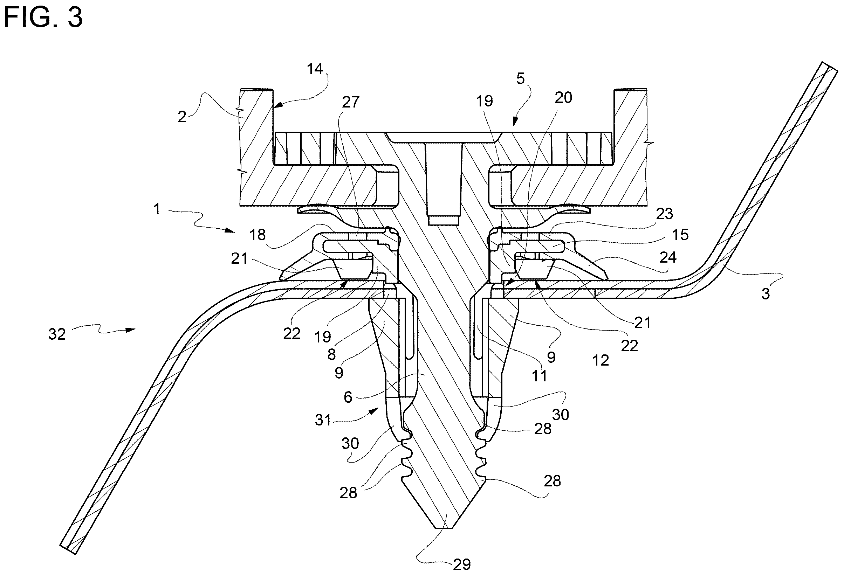

With reference to Figures 1 to 3, 1 denotes in its entirety a retaining device for connecting (Figure 3) a functional component 2 of a vehicle, in particular a door panel, to a vehicle body element 3, in particular a door frame.

The device 1, which is of a type in part already known, comprises a pin 4, consisting of a head 5 and a shank 6, and a bush 7.

The shank 6 projects axially from the head 5 towards the bush 7, with which it snap-engages in a known manner.

The bush 7 is configured in a known manner to engage with suitable through-holes 8 formed in the body element 3, by means of at least one pair of opposite teeth 9 of the bush, said teeth 9 being elastically deformable and projecting radially from a side wall 10 of the bush 7, on the outside thereof.

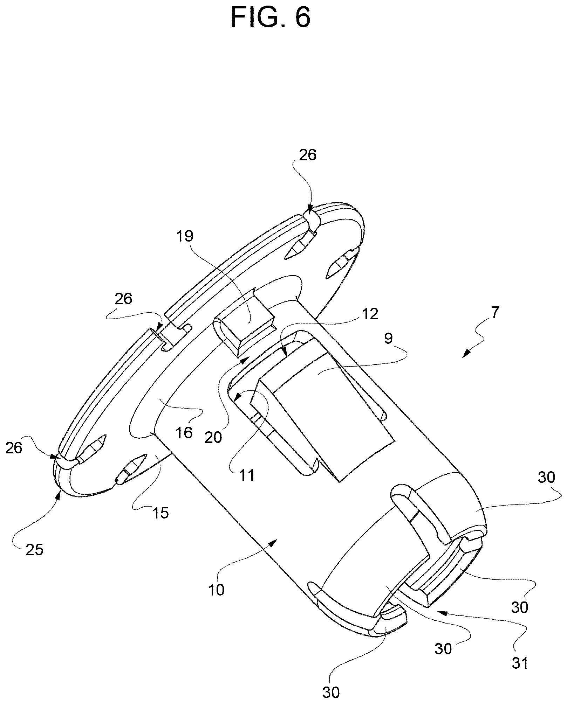

In the example shown, the teeth 9 are formed as wedge-shaped elements which extend projecting inside respective through-windows 11 formed in the side wall 10. In particular, the teeth 9 (Figure 6) have a first end 12, configured as a stop element, defined by the thickest part of the wedge-shaped element and directed towards the head 5, and a second end 13, situated opposite to the end 12 and defined by the thinnest part of the wedge-shaped element, by means of which they are attached as one piece to the side wall 10, projecting therefrom. The end 13, since it is thin, is elastically deformable and allows the teeth 9 to flex elastically towards the inside of the windows 11 when a radial force is applied onto them from the outside.

The head 5 of the pin 4 is configured in a generally known manner so as to engage during use with suitable seats 14 in the functional element 2, while the shank 6 of the pin 4 is configured to snap-engage, in a generally known manner which will be described below, inside the bush 7.

The bush 7 (Figure 6) includes a flange 15 which is formed at a first end 16 of the bush 7 directed towards the head 5 of the pin 6 and which extends radially on the outside of the bush 7, in particular extends radially projecting from the side wall 10, radially on the outside of the bush 7.

The flange 15 is provided integral with an annular gasket element 18 which is formed in the manner of a sucker element and overmoulded onto the flange 15 which is therefore embedded inside the gasket element 18.

The bush 7 and the pin 4 are made of a synthetic plastic material and are injection-moulded; the gasket element 18 is instead moulded from an elastomer or a soft synthetic plastic material so as to be elastically deformable. In any case, at least the bush 7 is made of a first relatively rigid material, while the gasket element 18 is made of a second material, different from the first material and softer and more deformable than that from which the pin 4 and the bush 7 are made.

Furthermore, the bush 7 is provided with respective shoulder elements 19 (Figure 6) formed on the flange 15 and arranged facing the teeth 9, in particular the end 12 of the teeth 9.

The shoulder elements 19 project radially on the outside from the side wall 10 of the bush 7 and are configured to cooperate during use with the body element 3 along a radially inner edge of one of the aforementioned through-holes 8.

The shoulder elements 19 are also arranged at a predefined distance from the stop end 12 of the teeth 9 which is directed towards the flange 15.

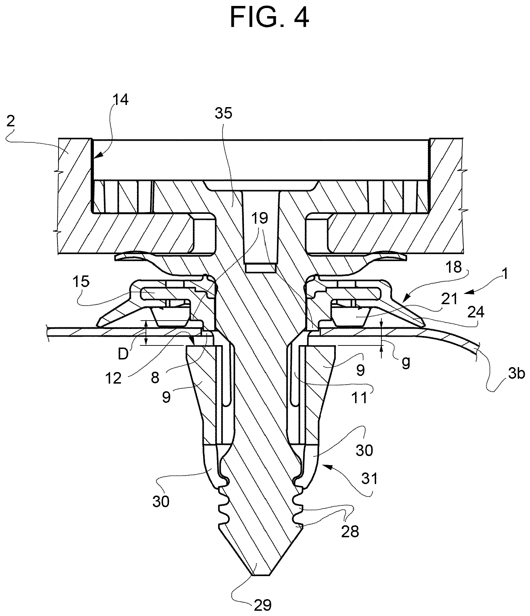

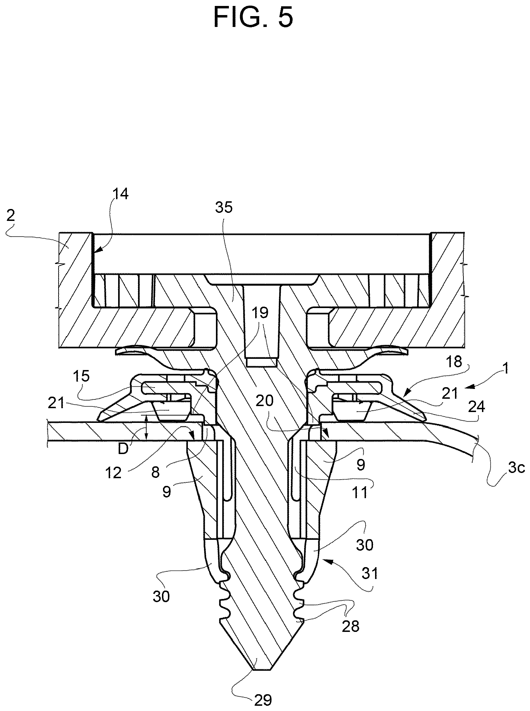

The stop ends 12 of the teeth 9 therefore form together with the shoulder elements 19 respective radial recesses 20 with a height D (Figures 4, 5) measured parallel to the shank 6 such as to be able to accommodate inside each recess 20, between each shoulder element 19 and a corresponding facing tooth 9, body elements 3b,3c (Figures 4,5) of varying thickness.

In fact, the body element 3 may have different thicknesses, depending on the position in which each single hole 8 is formed, for example owing to local reinforcements, as shown in Figure 3, where the body element 3 is formed by two superimposed metal sheets instead of a single metal sheet.

According to one aspect of the invention, the flange 15 is formed integrally as one piece with the bush 7 using the said first material, while the sucker-like annular element 18 is formed co-moulded onto the flange 15 using a second material, softer than the first material, and is provided towards the recesses 20, according to an important aspect of the invention, with a plurality of projections 21 which project axially from the sucker-like annular element 18, parallel to the shank 6 of the pin 4, and towards the teeth 9.

The projections 21 are made using the same second material used to make the gasket element 18 and are formed integrally as one piece with the sucker-like annular gasket element 18.

The projections 21 are elastically deformable and project axially, in their undeformed condition, shown in Figure 2, along a length, measured parallel to the shank 6, equal to at least a substantial part of the height D of the recesses 20, again measured parallel to the shank 6.

Here and below "substantial part" is understood as meaning a value equal to at least 50% of the reference value. In the example shown, therefore, the projecting height of the projections 21, in the undeformed condition, will be at least 50%, or more, of the height D.

According to the invention, the first material is, as already mentioned, a relatively rigid synthetic plastic material, while the second material, as already mentioned, is an elastomer or a soft and elastically deformable synthetic plastic material.

The projections 21, in plan view, extend circumferentially with a circle arc configuration and have, viewed in cross-section (Figure 2), radially with respect to the sucker-like annular element 18, the form/shape of an isosceles triangle, a vertex of which defines a free end 22 of each projection 21.

The vertex of the isosceles triangle cross-section of each projection, which defines the free end 22 of the respective projection 21, is preferably rounded.

According to one aspect of the invention, the projections 21, in their undeformed condition, project axially from the sucker element 18 over a length, measured parallel to the shank 6, such that the projections 21 are situated partly facing the recesses 20, radially on the outside of the recesses 20 and radially spaced from the recesses 20.

The sucker-like annular element 18 comprises a flange portion 23 (Figures 1 and 3) inside which the flange 15 of the bush is embedded and an elastically deformable annular lip 24 formed in the manner of a truncated cone, which annular lip 24 extends radially and axially projecting from the flange portion 23 on the opposite side to the head 5 of the pin 4 and from a radially outer edge of the flange portion 23 which extends projecting from a corresponding radially outer edge 25 (Figure 6) of the flange 15 of the bush 7.

The radially outer edge 25 of the flange 15 of the bush 7 is provided with a plurality of radial indentations 26 (Figure 6) so that the radially outer edge of the sucker-like annular element 18 is at least partially not supported by the flange 15 of the bush 7 and therefore may flex more easily.

The flange portion 23 of the sucker-like annular element 18 is preferably provided on the side where the head 5 of the pin 4 is located and opposite the flange 15 with a plurality of circumferential slits 27 (Figure 1) which increase the elasticity thereof.

The projections 21 are also formed substantially along the radially outer edge of the flange portion 23 of the sucker-like annular element 18 and therefore in the vicinity of, but already radially beyond, the edge 25 so as to obtain the maximum possible elastic flexibility from the projections 21.

The snap-engagement between pin 4 and bush 7 is obtained, in the non-limiting example shown, by means of a plurality of radial annular teeth 28 (Figure 3) which are formed at a free end 29 of the shank 6 opposite to the head 5 and which are configured so as to snap-engage with a plurality of elastically deformable and circumferentially extending winglets 30 (in the example shown four winglets) which project axially from the side wall 10 so as to define a free end 31 of the bush 7, opposite to the end where the flange 15 is located.

Based on the description provided hitherto, it is clear that the invention also relates to a retaining system, denoted overall by 32 (Figure 3), for connecting a functional component 2 of a vehicle to a body element 3 of a vehicle, comprising: a through-hole 8 in the body element 3, a seat 14 in the functional element 2 and a retaining device 1 as described above, including a pin 4 consisting of a head 5 and a shank 6, the shank 6 projecting axially from the head 5, and a bush 7 configured to engage with the through-hole 8 by means of at least one pair of opposite teeth 9 of the bush, which project radially from a side wall 10 of the bush 7, on the outside thereof.

The head 5 of the pin 4 is configured to engage with the seat 14 of the functional element 2 and the shank 6 of the pin 4 is configured to snap-engage inside the bush 7, the latter including: a flange 15 formed radially on the outside of the bush 7 at a first end 16 of the bush 7 directed towards the head 5 of the pin 4, the flange 15 being provided integral with a sucker-like annular gasket element 18; and respective shoulder elements 19 formed on the flange 15 and arranged facing the teeth 9, the shoulder elements 19 projecting radially on the outside from the side wall 10 and being configured to cooperate with the body element 2 along an edge of the through-hole 8, the shoulder elements 19 being arranged at a predefined distance D from a stop end 12 of the teeth 9 which is directed towards the flange 15, so as to form with the shoulder elements 19 respective radial recesses 20 with a height D such as to be able to accommodate inside each recess 20, between each shoulder element 19 and a corresponding facing tooth 9, body elements 3b,3c of varying thickness.

The retaining system 32 according to the invention is characterized in that the flange 15 is formed integrally as one piece with the bush 7, being made of a first material, while the sucker-like annular element 18 is formed co-moulded onto the flange 15, being made of a material which is softer than the first material, and is provided towards the recesses 20 with a plurality of projections 21 which project axially from the sucker-like annular element 18, parallel to the shank 6 of the pin 4, being also made of the second material, and which are formed integrally as one piece with the sucker element 18.

The projections 21 are elastically deformable and project axially, in their undeformed condition, over a length, measured parallel to the shank 6, such as to face at least part of the recesses 20, radially on the outside and radially spaced from them.

The projections 21 come into contact, during use, with the body element 2 so as to compensate at least partly for any axial play g between the recesses 20 and the edge of the through-hole 8 in the body element 3, when body elements 3b,3c of varying thickness are present; in the example shown, the distance or height D and the height of axial projecting extension of the projections 21 are calculated so that with body elements 3c which have a larger thickness (Figure 5), there is no play g, whereas with body elements 3b which have a smaller thickness (Figure 4), at the most a minimum amount of play g remains and is compensated for, as regards the remainder of the theoretical play which might be present owing to the difference in thickness between the body element 3b and the body element 3c, by the projections 21 which may be partly compressed such that their projecting height is reduced. The residual play g which remains is, however, according to the invention insufficient to cause undesirable noisiness or vibrations of the functional component 2, also owing to the damping or elastic effect of the projections 21 which are made of elastomer or in any case an elastically deformable material.

Preferably, the seat 14 of the functional element 2 is a seat which is open laterally so that the head 5 may be slidably inserted sideways into the seat 14. The head 5 is however made so as to be elastically deformable so that it may in any case be inserted, for example, inside the seat 14 and then expand and occupy the seat so as to prevent extraction from the functional element 2.

For this purpose, the head 5 comprises (Figure 1): a first annular element 33 which is elastically deformable in a radial direction and in turn comprises a peripherally outer ring 34, a hub 35 formed by one end of the shank opposite to the end 29, and a plurality of radial connecting arms 36 between the hub 35 and the ring 34 formed as elastically deformable curved strips.

The head 5 also comprises a second annular element 37 in the form of a flange arranged between the first annular element 33 and the bush 7 and formed so as to be relatively rigid, but in any case elastically deformable, in the example being shown formed as a sucker element with its concavity directed towards the element 33 so as to be able to "pinch" the functional element 2 between the two annular elements 33 and 37.

In this way, a plurality of devices 1 are first of all engaged with the functional element 2, each inside a seat 14 thereof, the bush of each device 1 being preassembled on the pin 4 with snap-engagement only of a first tooth 28 (Figure 2) closest to the end 29. Then the functional element 2 is arranged on the body element 3, each device 1 being positioned opposite a hole 8. Finally, by exerting an axial thrust, the bushes 7 are inserted through the holes 8 owing to the elastic flexing of the teeth 9 which then snap back out again into a radially projecting position, preventing any extraction of the bushes 7. Continuing with the axial thrusting force the pins 4 are pressed more fully inside the bushes 7 which are then engaged by other teeth 28 situated further from the end 29 until the shoulder elements 19 bear against the body element 3.

During this insertion movement the projections 21 also come into contact with the body element 3 and are elastically deformed and then perform an at least partial elastic return movement, so as to take up at least a substantial part of the axial play which may be present in the case of engagement with a thinner body element 3b.

All the objects of the invention are therefore achieved.

## Claims

1. Retaining device (1) for connecting a functional component (2) of a vehicle, in particular a door panel, to a body element (3) of a vehicle, in particular to a door frame, comprising: a pin (4) consisting of a head (5) and a shank (6), the shank projecting axially from the head, and a bush (7) configured to engage with suitable through-holes (8) formed in the body element by means of at least one pair of opposite teeth (9) of the bush, which project radially from a side wall (10) of the bush, on the outside thereof; the head (5) of the pin being configured to engage during use with suitable seats (14) of the functional element and the shank (6) of the pin being configured to snap-engage inside the bush (7), the latter including: a flange (15) formed at a first end (16) of the bush directed towards the head of the pin and radially on the outside of the bush, the flange being provided integral with an annular gasket element (18) formed in the manner of sucker element; and respective shoulder elements (19) formed on the flange and arranged facing the said teeth (9), said shoulder elements projecting radially on the outside from the side wall of the bush and being configured to cooperate during use with the body element along an edge of a said through-hole (8) and being arranged at a predefined distance (D) from a stop end (12) of the teeth (9) directed towards the flange, so as to form with the shoulder elements respective radial recesses (20) having a height such as to be able to accommodate inside the recess, between each shoulder element and a corresponding facing tooth, body elements of varying thickness; wherein the flange (15) is formed integrally as one piece with the bush (7), being made of a first material, while the sucker-like annular element (18) is formed co-moulded onto the flange, being made of a second material softer than the first material, **characterized in that** the sucker-like annular element is provided towards said recesses (20) with a plurality of projections (21) which project axially from the sucker-like annular element, parallel to the shank of the pin, such as to face at least part of said recesses (20), radially on the outside and radially spaced from said recesses (20), and are formed integrally as one piece with the sucker element, being also made of said second material; said projections (21) being elastically deformable and projecting axially, in their undeformed condition, over a length, measured parallel to the shank, equal to at least 50% of a height (D) of the said recesses (20), again measured parallel to the shank.

2. Retaining device according to Claim 1, **characterized in that** first material is a relatively rigid synthetic plastic material, while the second material is an elastomer or a soft and elastically deformable synthetic plastic material.

3. Retaining device according to Claim 1 or 2, **characterized in that** said projections (21), in plan view, extend circumferentially with a circle arc configuration and, in a cross-sectional view, radially with respect to the sucker-like annular element, have the form of an isosceles triangle, a vertex of which defines a free end (22) of each projection.

4. Retaining device according to Claim 3, **characterized in that** said vertex of the isosceles triangle cross-section of each projection (21), defining a free end (22) of the respective projection, is rounded.

5. Retaining device according to any one of the preceding claims, **characterized in that** said projections, in their undeformed condition, project axially from the sucker element (18) over a length, measured parallel to the shank, such that the projections partly face the said recesses (20), radially on the outside of the recesses and radially spaced from the recesses.

6. Retaining device according to any one of the preceding claims, **characterized in that** said sucker-like annular element (18) comprises a flange portion (23) inside which said flange (15) of the bush is embedded and an annular lip (24) which is elastically deformable and formed in the manner of a truncated cone, said annular lip (24) extending radially and axially projecting from the flange portion (23) on the opposite side to the head of the pin and from a radially outer edge of the flange portion which extends projecting from a corresponding radially outer edge (25) of the flange of the bush.

7. Retaining device according to Claim 6, **characterized in that** said radially outer edge (25) of the flange (15) of the bush is provided with a plurality of radial indentations (26) so that the radially outer edge of the sucker-like annular element (18) is at least partially not supported by the flange (15) of the bush and therefore may easily flex; said flange portion (23) of the sucker-like annular element being provided, on the side where the head of the pin is located and opposite the flange of the bush, with a plurality of circumferential slits (27); said projections (21) being formed substantially along said radially outer edge of the flange portion (23) of the sucker-like annular element.

8. Retaining system (32) for connecting a functional component (2) of a vehicle to a body element (3) of a vehicle, comprising: a through-hole (8) in the body element (3); a seat (14) in the functional component; and a retaining device (1) including a pin (4) consisting of a head and a shank, the shank projecting axially from the head, and a bush (7) configured to engage with the through-hole by means of at least one pair of opposite teeth (9) of the bush, which project radially from a side wall (10) of the bush, on the outside thereof; the head (5) of the pin being configured to engage with the seat (14) of the functional element and the shank (6) of the pin being configured to snap-engage inside the bush (7), the latter including: a flange (15) formed at a first end of the bush directed towards the head of the pin and radially on the outside of the bush, the flange being provided integral with an annular gasket element (18) formed in the manner of sucker element; and respective shoulder elements (19) formed on the flange and arranged facing the said teeth (9), said shoulder elements projecting radially on the outside from the side wall of the bush and being configured to cooperate with the body element along an edge of the through-hole, said shoulder elements being arranged at a predefined distance from a stop end of the teeth directed towards the flange, so as to form with the shoulder elements respective radial recesses (20) having a height such as to be able to accommodate inside the recess, between each shoulder element and a corresponding facing tooth, body elements (3b;3c) of varying thickness; wherein the flange (15) is formed integrally as one piece with the bush (7), being made of a first material, while the sucker-like annular element (18) is formed co-moulded onto the flange, being made of a second material softer than the first material, **characterized in that** the sucker-like annular element is provided towards said recesses with a plurality of projections (21) which project axially from the sucker-like annular element, parallel to the shank of the pin, so as to face at least part of said recesses (20), radially on the outside and radially spaced from them, and are formed integrally as one piece with the sucker element, being also made of said second material; said projections (21) being elastically deformable and projecting axially, in their undeformed condition, over a length, measured parallel to the shank, equal to at least 50% of a height (D) of the said recesses, again measured parallel to the shank; said projections (21) coming into contact with the body element so as to compensate at least partly for any axial play (g) between said recesses and said edge of the through-hole of the body element when body elements of varying thickness are present.

9. Retaining system according to Claim 8, **characterized in that** said seat (14) of the functional element is open laterally.

10. Retaining system according to Claim 8 or 9, **characterized in that** said head (5) of the pin comprises: a first annular element (33) elastically deformable in a radial direction and comprising in turn a peripherally outer ring (34), a hub (35) formed by a first end of the shank, and a plurality of radial connecting arms (36) between the hub and ring formed as elastically deformable curved strips; and a second annular element (37) in the form of a flange arranged between the first annular element and the bush (7) and formed so as to be relatively rigid, but elastically deformable.

## Patentansprüche

1. Haltevorrichtung (1) zum Verbinden eines Funktionsbauteils (2) eines Fahrzeuges, insbesondere eine Türverkleidung, mit einem Karosserieelement (3) eines Fahrzeugs, insbesondere einem Türrahmen, aufweisend: einen Stift (4), der aus einem Kopf (5) und einem Schaft (6) besteht, wobei der Schaft axial von dem Kopf vorsteht, und eine Buchse (7), die so konfiguriert ist, dass sie mit geeigneten Durchgangslöchern (8), die in dem Karosserieelement ausgebildet sind, mittels zumindest eines Paars gegenüberliegender Zähne (9) der Buchse in Eingriff kommt, die radial von einer Seitenwand (10) der Buchse an der Außenseite davon vorstehen; wobei der Kopf (5) des Stifts so konfiguriert ist, dass er während des Gebrauchs mit geeigneten Sitzen (14) des Funktionselements in Eingriff kommt, und wobei der Schaft (6) des Stifts so konfiguriert ist, dass er innerhalb der Buchse (7) einrastet, wobei Letztere beinhaltet: einen Flansch (15), der an einem ersten Ende (16) der Buchse ausgebildet ist, das zu dem Kopf des Stifts und radial an der Außenseite der Buchse ausgerichtet ist, wobei der Flansch integral mit einem ringförmigen Dichtungselement (18) versehen ist, das in der Art eines Saugelements ausgebildet ist; und jeweilige Schulterelemente (19), die an dem Flansch ausgebildet und den Zähnen (9) zugewandt angeordnet sind, wobei die Schulterelemente außen radial von der Seitenwand der Buchse vorstehen und so konfiguriert sind, dass sie während des Gebrauchs mit dem Karosserieelement entlang einer Kante eines Durchgangslochs (8) zusammenwirken und in einem vordefinierten Abstand (D) zu einem Anschlagende (12) der Zähne (9) angeordnet sind, das zu dem Flansch hin ausgerichtet ist, um mit den Schulterelementen jeweilige radiale Aussparungen (20) mit einer solchen Höhe auszubilden, sodass sie innerhalb der Aussparung zwischen jedem Schulterelement und einem entsprechenden gegenüberliegenden Zahn Karosserieelemente unterschiedlicher Dicke aufnehmen können; wobei
der Flansch (15) integral einstückig mit der Buchse (7) ausgebildet ist, die aus einem ersten Material hergestellt ist, während das saugerartige ringförmige Element (18) an den Flansch angeformt ist, wobei es aus einem zweiten Material hergestellt ist, das weicher als das erste Material ist, **dadurch gekennzeichnet, dass** das saugerartige ringförmige Element mit einer Vielzahl von Vorsprüngen (21) hin zu den Aussparungen (20) versehen ist, die axial von dem saugerartigen ringförmigen Element parallel zu dem Schaft des Stifts derart vorstehen, dass sie zumindest einem Teil der Aussparungen (20) zugewandt sind, radial an der Außenseite und radial von den Ausnehmungen (20) beabstandet, und integral einstückig mit dem Saugelement ausgebildet sind, das ebenfalls aus dem zweiten Material hergestellt ist; wobei die Vorsprünge (21) elastisch verformbar sind und in ihrem unverformten Zustand über eine Länge, parallel zu dem Schaft gemessen, von zumindest 50 % einer Höhe (D) der Aussparungen (20), wiederum parallel zu dem Schaft gemessen, axial vorstehen.

2. Haltevorrichtung nach Anspruch 1,
**dadurch gekennzeichnet, dass** das erste Material ein relativ steifes synthetisches Kunststoffmaterial ist, während das zweite Material ein Elastomer oder ein weiches und elastisch verformbares synthetisches Kunststoffmaterial ist.

3. Haltevorrichtung nach Anspruch 1 oder 2,
**dadurch gekennzeichnet, dass** sich die Vorsprünge (21) in Draufsicht in Umfangsrichtung mit einer Kreisbogenkonfiguration erstrecken und in einer Querschnittsansicht radial in Bezug auf das saugerartige ringförmige Element die Form eines gleichschenkligen Dreiecks aufweisen, dessen Scheitelpunkt ein freies Ende (22) jedes Vorsprungs definiert.

4. Haltevorrichtung nach Anspruch 3,
**dadurch gekennzeichnet, dass** der Scheitelpunkt des Querschnitts des gleichschenkligen Dreiecks jedes Vorsprungs (21), der ein freies Ende (22) des jeweiligen Vorsprungs definiert, abgerundet ist.

5. Haltevorrichtung nach einem der vorhergehenden Ansprüche, **dadurch gekennzeichnet, dass** die Vorsprünge in ihrem unverformten Zustand axial von dem Saugelement (18) über eine Länge vorstehen, die parallel zu dem Schaft gemessen wird, sodass die Vorsprünge teilweise den Aussparungen (20) radial an der Außenseite der Aussparungen zugewandt sind und radial von den Aussparungen beabstandet sind.

6. Haltevorrichtung nach einem der vorhergehenden Ansprüche, **dadurch gekennzeichnet, dass** das saugerartige ringförmige Element (18) einen Flanschabschnitt (23), in dem der Flansch (15) der Buchse eingebettet ist, und eine ringförmige Lippe (24) aufweist, die elastisch verformbar und in der Art eines Kegelstumpfs ausgebildet ist, wobei sich die ringförmige Lippe (24) radial erstreckt und axial von dem Flanschabschnitt (23) auf der dem Kopf des Stifts gegenüberliegenden Seite und von einer radial äußeren Kante des Flanschabschnitts vorsteht, der sich von einer entsprechenden radial äußeren Kante (25) des Flansches der Buchse vorstehend erstreckt.

7. Haltevorrichtung nach Anspruch 6,
**dadurch gekennzeichnet, dass** die radial äußere Kante (25) des Flansches (15) der Buchse mit einer Vielzahl von radialen Vertiefungen (26) versehen ist, sodass die radial äußere Kante des saugerartigen ringförmigen Elements (18) zumindest teilweise nicht durch den Flansch (15) der Buchse getragen wird und sich daher leicht biegen kann; wobei der Flanschabschnitt (23) des saugerartigen ringförmigen Elements auf der Seite, auf der sich der Kopf des Stifts befindet und die dem Flansch der Buchse gegenüberliegt, mit einer Vielzahl von Umfangsschlitzen (27) versehen ist; wobei die Vorsprünge (21) im Wesentlichen entlang der radial äußeren Kante des Flanschabschnitts (23) des saugerartigen ringförmigen Elements ausgebildet sind.

8. Haltesystem (32) zum Verbinden eines Funktionsbauteils (2) eines Fahrzeugs mit einem Karosserieelement (3) eines Fahrzeugs, aufweisend: ein Durchgangsloch (8) in dem Karosserieelement (3); eine Sitzaufnahme (14) in dem Funktionsbauteil; und eine Haltevorrichtung (1), die einen Stift (4), der aus einem Kopf und einem Schaft besteht, wobei der Schaft axial von dem Kopf vorsteht, und eine Buchse (7) beinhaltet, die so konfiguriert ist, dass sie mit dem Durchgangsloch mittels zumindest eines Paares gegenüberliegender Zähne (9) der Buchse in Eingriff kommt, die radial von einer Seitenwand (10) der Buchse an der Außenseite davon vorstehen; wobei der Kopf (5) des Stifts so konfiguriert ist, dass er mit der Sitzaufnahme (14) des Funktionsbauteils in Eingriff kommt, und der Schaft (6) des Stifts so konfiguriert ist, dass er innerhalb der Buchse (7) einrastet, wobei Letztere beinhaltet: einen Flansch (15), der an einem ersten Ende der Buchse ausgebildet ist, das zu dem Kopf des Stifts und radial an der Außenseite der Buchse ausgerichtet ist, wobei der Flansch integral mit einem ringförmigen Dichtungselement (18) versehen ist, das in der Art eines Saugelements ausgebildet ist; und jeweilige Schulterelemente (19), die an dem Flansch ausgebildet und den Zähnen (9) zugewandt angeordnet sind, wobei die Schulterelemente radial an der Außenseite von der Seitenwand der Buchse vorstehen und so konfiguriert sind, dass sie mit dem Karosserieelement entlang einer Kante des Durchgangslochs zusammenwirken, wobei die Schulterelemente in einem vordefinierten Abstand zu einem Anschlagsende der Zähne angeordnet sind, das zu dem Flansch hin ausgerichtet ist, um mit den Schulterelementen jeweilige radiale Aussparungen (20) mit einer solchen Höhe auszubilden, dass sie innerhalb der Aussparung zwischen jedem Schulterelement und einem entsprechenden gegenüberliegenden Zahn Karosserieelemente (3b; 3c) unterschiedlicher Dicke aufnehmen können;
wobei der Flansch (15) integral einstückig mit der Buchse (7) ausgebildet ist, die aus einem ersten Material hergestellt ist, während das saugerartige ringförmige Element (18) an den Flansch angeformt ist, der aus einem zweiten Material hergestellt ist, das weicher als das erste Material ist, **dadurch gekennzeichnet, dass** das saugerartige ringförmige Element zu den Aussparungen hin mit einer Vielzahl von Vorsprüngen (21) versehen ist, die axial von dem saugerartigen ringförmigen Element parallel zum Schaft des Stifts vorstehen, um zumindest einem Teil der Aussparungen (20) zugewandt zu sein, radial an der Außenseite und radial beabstandet davon, und integral einstückig mit dem Saugelement ausgebildet sind, das ebenfalls aus dem zweiten Material hergestellt ist; wobei die Vorsprünge (21) elastisch verformbar sind und in ihrem unverformten Zustand über eine Länge, parallel zu dem Schaft gemessen, von mindestens 50 % einer Höhe (D) der Aussparungen, wiederum parallel zu dem Schaft gemessen; axial vorstehen; wobei die Vorsprünge (21) mit dem Karosserieelement in Kontakt kommen, um ein axiales Spiel (g) zwischen den Aussparungen und der Kante der Durchgangsöffnung des Karosserieelements zumindest teilweise auszugleichen, wenn Karosserieelemente unterschiedlicher Dicke vorhanden sind.

9. Haltesystem nach Anspruch 8,
**dadurch gekennzeichnet, dass** die Sitzaufnahme (14) des Funktionselements seitlich offen ist.

10. Haltesystem nach Anspruch 8 oder 9,
**dadurch gekennzeichnet, dass** der Kopf (5) des Stifts aufweist:
ein erstes ringförmiges Element (33), das in einer radialen Richtung elastisch verformbar ist und wiederum einen peripher äußeren Ring (34) aufweist, eine Nabe (35), die durch ein erstes Ende des Schafts ausgebildet ist, und eine Vielzahl von radialen Verbindungsarmen (36) zwischen der Nabe und dem Ring, die als elastisch verformbare gekrümmte Streifen ausgebildet sind; und
ein zweites ringförmiges Element (37) in Form eines Flansches, das zwischen dem ersten ringförmigen Element und der Buchse (7) angeordnet und relativ starr, aber elastisch verformbar ausgebildet ist.

## Revendications

1. Dispositif de retenue (1) pour la liaison d'un élément fonctionnel (2) d'un véhicule, en particulier un panneau de porte, à un élément de carrosserie (3) d'un véhicule, en particulier sur un encadrement de porte, comprenant : une broche (4) constituée d'une tête (5) et d'une tige (6), la tige faisant saillie axialement à partir de la tête, et une douille (7) configurée pour s'engager avec des trous traversants appropriés (8) formés dans l'élément de carrosserie au moyen d'au moins une paire de dents opposées (9) de la douille, qui font saillie radialement à partir d'une paroi latérale (10) de la douille, à l'extérieur de celle-ci ; la tête (5) de la broche étant configurée pour s'engager durant l'utilisation avec des sièges appropriés (14) de l'élément fonctionnel et la tige (6) de la broche étant configurée pour s'engager par encliquetage à l'intérieur de la douille (7), cette dernière comprenant : une bride (15) formée sur une première extrémité (16) de la douille dirigée vers la tête de la broche et radialement sur l'extérieur de la douille, la bride étant fournie d'un seul tenant avec un élément de joint annulaire (18) formé à la manière d'un élément de ventouse ; et des éléments d'épaulement respectifs (19) formés sur la bride et agencés faisant face auxdites dents (9), lesdits éléments d'épaulement faisant saillie radialement sur l'extérieur à partir de la paroi latérale de la douille et étant configurés pour coopérer durant l'utilisation avec l'élément de carrosserie le long d'un bord d'un dit trou traversant (8) et étant agencés à une distance prédéfinie (D) d'une extrémité de butée (12) des dents (9) dirigée vers la bride, afin de former avec les éléments d'épaulement des évidements radiaux respectifs (20) ayant une hauteur telle qu'ils peuvent se loger à l'intérieur de l'évidement, entre chaque élément d'épaulement et une dent faisant face correspondante, des éléments de carrosserie d'épaisseur variable ; dans lequel
la bride (15) est formée d'un seul tenant avec la douille (7), étant faite d'un premier matériau, tandis que l'élément annulaire en forme de ventouse (18) est formé par co- moulage sur la bride, étant fait d'un deuxième matériau plus mou que le premier matériau, **caractérisé en ce que** l'élément annulaire en forme de ventouse est fourni, vers lesdits évidements (20), avec une pluralité de saillies (21) qui font saillie axialement à partir de l'élément annulaire en forme de ventouse, parallèlement à la tige de la broche, de manière à faire face à au moins une partie desdits évidements (20), radialement à l'extérieur et espacé radialement desdits évidements (20), et sont formés d'un seul tenant en tant qu'une pièce avec l'élément de ventouse, étant également fait dudit deuxième matériau ; lesdites saillies (21) étant élastiquement déformables et faisant saillie axialement, dans leur état non déformé, sur une longueur, mesurée parallèlement à la tige, égale à au moins 50 % d'une hauteur (D) desdits évidements (20), également mesurée parallèlement à la tige.

2. Dispositif de retenue selon la revendication 1, **caractérisé en ce que** le premier matériau est un matériau plastique synthétique relativement rigide, tandis que le deuxième matériau est un élastomère ou un matériau plastique synthétique mou et élastiquement déformable.

3. Dispositif de retenue selon la revendication 1 ou 2,
**caractérisé en ce que** lesdites saillies (21), en vue en plan, s'étendent circonférentiellement avec une configuration en arc de cercle et, en vue en coupe transversale, radialement par rapport à l'élément annulaire en forme de ventouse, ont la forme d'un triangle isocèle dont un sommet définit une extrémité libre (22) de chaque saillie.

4. Dispositif de retenue selon la revendication 3, **caractérisé en ce que** ledit sommet de la section transversale du triangle isocèle de chaque saillie (21), définissant une extrémité libre (22) de la saillie respective, est arrondi.

5. Dispositif de retenue selon l'une quelconque des revendications précédentes, **caractérisé en ce que** lesdites saillies, dans leur état non déformé, font saillie axialement à partir de l'élément de ventouse (18) sur une longueur, mesurée parallèlement à la tige, de sorte que les saillies font partiellement face auxdits évidements (20), radialement sur l'extérieur des évidements et radialement espacées des évidements.

6. Dispositif de retenue selon l'une quelconque des revendications précédentes, **caractérisé en ce que** ledit élément annulaire de type ventouse (18) comprend une partie de bride (23) à l'intérieur de laquelle ladite bride (15) de la douille est encastrée et une lèvre annulaire (24) qui est élastiquement déformable et formée à la manière d'un cône tronqué, ladite lèvre annulaire (24) s'étendant radialement et faisant saillie axialement à partir de la partie de bride (23) sur le côté opposé à la tête de la broche et à partir d'un bord radialement extérieur de la partie de bride qui s'étend en faisant saillie à partir d'un bord radialement extérieur correspondant (25) de la bride de la douille.

7. Dispositif de retenue selon la revendication 6, **caractérisé en ce que** ledit bord radialement extérieur (25) de la bride (15) de la douille est fourni avec une pluralité d'indentations radiales (26) de sorte que le bord radialement extérieur de l'élément annulaire en forme de ventouse (18) n'est au moins partiellement pas supporté par la bride (15) de la douille et peut donc facilement fléchir ; ladite partie de bride (23) de l'élément annulaire en forme de ventouse étant fournie, du côté où la tête de la broche est située et opposée à la bride de la douille, avec une pluralité de fentes circonférentielles (27) ; lesdites saillies (21) étant formées sensiblement le long dudit bord radialement extérieur de la partie de bride (23) de l'élément annulaire de type ventouse.

8. Dispositif de retenue (32) pour la liaison d'un élément fonctionnel (2) d'un véhicule à un élément de carrosserie (3) d'un véhicule, comprenant : un trou traversant (8) dans l'élément de carrosserie (3) ; un siège (14) dans l'élément fonctionnel ; et un dispositif de retenue (1) comprenant une broche (4) constituée d'une tête et d'une tige, la tige faisant saillie axialement à partir de la tête, et une douille (7) configurée pour s'engager avec les trous traversants au moyen d'au moins une paire de dents opposées (9) de la douille, qui font saillie radialement à partir d'une paroi latérale (10) de la douille, sur l'extérieur de celle-ci ; la tête (5) de la broche étant configurée pour s'engager avec le siège (14) de l'élément fonctionnel et la tige (6) de la broche étant configurée pour s'engager par encliquetage à l'intérieur de la douille (7), cette dernière comprenant : une bride (15) formée sur une première extrémité de la douille dirigée vers la tête de la broche et radialement sur l'extérieur de la douille, la bride étant fournie d'un seul tenant avec un élément de joint annulaire (18) formé à la manière d'un élément de ventouse ; et des éléments d'épaulement respectifs (19) formés sur la bride et agencés faisant face auxdites dents (9), lesdits éléments d'épaulement faisant saillie radialement sur l'extérieur à partir de la paroi latérale de la douille et étant configurés pour coopérer avec l'élément de carrosserie le long d'un bord du trou traversant, lesdits éléments d'épaulement étant agencés à une distance prédéfinie d'une extrémité de butée des dents dirigée vers la bride, afin de former avec les éléments d'épaulement des évidements radiaux respectifs (20) ayant une hauteur telle qu'ils peuvent se loger à l'intérieur de l'évidement, entre chaque élément d'épaulement et une dent faisant face correspondante, des éléments de carrosserie (3b ; 3c) d'épaisseur variable ;
dans lequel la bride (15) est formée d'un seul tenant avec la douille (7), étant faite d'un premier matériau, tandis que l'élément annulaire en forme de ventouse (18) est formé par co-moulage sur la bride, étant fait d'un deuxième matériau plus mou que le premier matériau, **caractérisé en ce que** l'élément annulaire en forme de ventouse est fourni, vers lesdits évidements avec une pluralité de saillies (21) qui font saillie axialement à partir de l'élément annulaire en forme de ventouse, parallèlement à la tige de la broche, de manière à faire face à au moins une partie desdits évidements (20), radialement à l'extérieur et espacé radialement d'eux, et sont formés d'un seul tenant en tant qu'une pièce avec l'élément de ventouse, étant également fait dudit deuxième matériau ; lesdites saillies (21) étant élastiquement déformables et faisant saillie axialement, dans leur état non déformé, sur une longueur, mesurée parallèlement à la tige, égale à au moins 50 % d'une hauteur (D) desdits évidements, également mesurée parallèlement à la tige ; lesdites saillies (21) venant en contact avec l'élément de carrosserie afin de compenser au moins partiellement tout jeu axial (g) entre lesdits évidements et ledit bord du trou traversant de l'élément de carrosserie lorsque des éléments de carrosserie d'épaisseur variable sont présents.

9. Système de retenue selon la revendication 8, **caractérisé en ce que** ledit siège (14) de l'élément fonctionnel est ouvert latéralement.

10. Système de retenue selon la revendication 8 ou 9, **caractérisé en ce que** ladite tête (5) de la broche comprend : un premier élément annulaire (33) élastiquement déformable dans une direction radiale et comprenant à son tour une bague périphériquement extérieure (34), un moyeu (35) formé par une première extrémité de la tige, et une pluralité de bras de liaison radiaux (36) entre le moyeu et la bague formés comme des bandes incurvées élastiquement déformables ; et un deuxième élément annulaire (37) sous la forme d'une bride agencée entre le premier élément annulaire et la douille (7) et formé afin d'être relativement rigide, mais élastiquement déformable.
